# EUROPÄISCHE PATENTANMELDUNG

(11) **EP 1 063 465 A1**
(43) Veröffentlichungstag der Anmeldung: **27.12.2000**
(21) Anmeldenummer: 00112877.6
(22) Anmeldetag: 19.06.2000
(51) Int. Cl.: F16M 11/06

(54) **Befestigungsvorrichtung**

(30) Priorität: 21.06.1999 DE 19928382
(71) Anmelder: Holliger, Thomas, 4303 Kaiseraugst (CH)
(72) Erfinder: Holliger, Thomas, 4303 Kaiseraugst (CH)
(74) Vertreter: Allgeier, Kurt

(57) **Zusammenfassung**

Befestigungsvorrichtung als ortsfeste Halterung von grossvolumigen, wenigstens eine ebene oder gekrümmte Montagefläche aufweisende technischen Geräten, die beabstandet von vertikal oder horizontal sich erstreckenden, ebenen oder gekrümmten Massiv- Wandflächen angebracht sind, welche geschlossene Räume begrenzen, oder die im Freien aufgestellt sind. Diese Befestigungsvorrichtung weist insbesondere eine Grundplatte (3) mit einer ebenen oder gekrümmten Anschlussfläche (4) zum Verbinden mit der Montagefläche (2) des Gerätes (1), lösbare, mechanisch formschlüssig wirkende Verbindungsmittel zwischen der Anschlussfläche (4) und der Montagefläche (2), eine an die Grundplatte (3) starr angeschlossene Halterungsvorrichtung, an welcher wenigstens ein Halterungsarm (HA) um wenigstens eine Achse (x) schwenkbar und in jeder Schwenklage feststellbar angeordnet ist, und der an einem Ende zum Befestigen an der Massiv-Wandfläche (MF) mit einer Wand-Anschlussplatte (5) versehen ist, auf.

## Beschreibung

Die Erfindung betrifft eine Befestigungsvorrichtung zur ortsfesten Halterung von grossvolumigen, wenigstens eine ebene oder gekrümmte Montagefläche aufweisende technischen Geräten, die beabstandet von vertikal oder horizontal sich erstreckenden ebenen oder gekrümmten Massiv-Wandflächen, welche geschlossene Räume begrenzen, oder die im Freien aufgestellt sind.

Eine solche Vorrichtung ist durch das schweizer Patent 648 466 bekanntgeworden. Dort ist ein etwa halbkreisförmig gekrümmtes Tragrohr an einer Decken-Aufhängevorrichtung drehbar befestigt, welches ein Fernsehgerät an seiner Rückseite umgreift, und an dessen nach vorne gerichtetem Endarm das Gerät durch Verbindungsmittel montierbar ist.

Die erfindungsgemässe Vorrichtung ist zur Befestigung grossvolumiger technischer Geräte ausgebildet; dazu gehören u. a. auch sog. Plasma-Bildschirme, also grossflächige Fernsehgeräte und Projektoren.

Die erfindungsgemässe Befestigungsvorrichtung zur ortsfesten Halterung von grossvolumigen technischen Geräten, weist eine Grundplatte mit einer ebenen oder gekrümmten Anschlussfläche zum Verbinden mit der Montagefläche des Gerätes sowie lösbare, mechanisch formschlüssig wirkende Verbindungsmittel zwischen der Anschlussfläche und der Montagefläche auf und ferner ist sie mit einer an die Grundplatte starr angeschlossenen Halterungsvorrichtung versehen, an welcher wenigstens ein Halterungsarm um wenigstens eine Achse schwenkbar und in jeder Schwenklage feststellbar angeordnet ist, welcher an seinem Ende zum Befestigen an der Massiv-Wandfläche mit einer Wand-Anschlussplatte versehen ist.

Vorzugsweise ist vorgesehen, dass das lösbare, mechanisch formschlüssige Verbindungsmittel eine Verschraubung ist. Dabei ist ferner vorgesehen, dass die Verschraubung durch wenigstens zwei Sackloch-Gewindebohrungen in der Montageflache des Gerätes zwei mit diesen fluchtenden Bohrungen in der Grundplatte und wenigstens zwei Schrauben gebildet ist.

Weitere wesentliche Merkmale der erfindungsgemässen Vorrichtung können noch darin bestehen, dass der Halterungsarm teleskopartig verlänger- und verkürzbar ist und ferner, dass der Halterungsarm um zwei voneinander beabstandete Achsen schwenkbar ist, die parallel zueinander oder in sich kreuzenden Ebenen verlaufen. Durch die Teleskopierbarkeit des Haltungsarms und durch die durch wenigstens ein Gelenk geschaffene Gelenkigkeit kann das an der Vorrichtung befestigte Gerät in weiten Grenzen beweglich ausgerichtet und in der gewählten Position festgestellt werden.

Eine vorteilhafte Ausbildungsweise der Vorrichtung ist dann zu sehen, dass sie wenigstens zwei beabstandete, parallele Seitenwandungen aufweist, welche Lagerstellen I für eine querverlaufende Achse (x) aufweisen, auf welcher ein zylindrischer Schwenkkörper gelagert ist, an dem der Halterungsarm angebracht ist. Dabei hat der zylindrische Schwenkkörper an seinen den Seitenwandungen zugewandten Stirnflächen parallel zu seiner Achse (x) verlaufende Gewindebohrungen, in welche Befestigungsschrauben eingeschraubt sind, welche sichelförmige Schlitze in den Seitenwandungen durchsetzen und den Schwenkkörper mit den Seitenwandungen drehfest verbinden. Durch die sichelförmigen Schlitze ist es möglich, den Schwenkkörper mit dem Halterungsarm in einer Schwenklage von ca. 15° einerseits und ca. 35° andererseits gegenüber der Horizontalen oder Vertikalen zu fixieren.

Vorteilhafterweise können ferner an den beiseitigen Stirnflächen des Schwenkkörpers wenigstens drei um ca. 90° versetzte Gewindebohrungen angebracht sein; dadurch ist es weiter möglich, den Schwenkkörper mit dem Halterungsarm in drei unterschiedlichen, um jeweils 90° verschwenkten Grund-Positionen zu fixieren. Aus diesen drei Grundpositionen kann der Schwenkkörper mit dem Halterungsarm um bis zu ca. 15° einerseits und ca. 35° andererseits gegenüber der Horizontalen oder Vertikalen zusätzlich in eine gewünschte Fein-Position geschwenkt werden.

Zweckmässigerweise kann der Halterungsarm als Rohr ausgebildet sein, welches mittels eines sich an einem im Inneren vorhandenen Vorsprung abstützenden Ankerbolzens in einer Bohrung im Schwenkkörper gelagert und mittels einer Mutter verschraubt ist.

Erfindungsgemäss ist die Vorrichtung zusätzlich in einer zur x-Achse senkrecht stehenden y-Achse schwenkbar, die identisch der Mittelachse des Halterungsarms ist. Durch Einstellen des Ankerbolzens, der in der y-Achse liegt, ist die Vorrichtung dreh- und fixierbar.

Unabhängig von der Position der Vorrichtung bezüglich der x- und der y-Achse ist die Vorrichtung zusätzlich um eine zu diesen beiden Achsen senkrecht stehenden z-Achse schwenkbar. Eine dazu vorgesehene Schwenkvorrichtung, die den Schwenkkörper, der an dem Halterungsarm dreh- und fixierbar befestigt ist aufnimmt, ist über eine in der z-Achse liegende Lagerung innerhalb der Grundplatte um ca. ± 10° Grad zur Horizontalen schwenk und fixierbar. Die an der Anschlussfläche befestigten Geräte sind somit in der horizontalen Ebene in den zwei senkrecht zueinander stehenden Achsen x und z ausrichtbar, unabhängig davon, welche Drehposition über die y-Achse eingestellt ist.

Ferner kann vorgesehen sein, dass die Grundplatte einen umlaufenden Bordrand aufweist, mittels welchem sie sich auf der Montagefläche des Gerätes aufstützt.

Ausführungsbeispiele der Erfindung sind in der Zeichnung dargestellt und nachstehend beschrieben. Es zeigen
- Fig. 1: die Vorrichtung als Deckenaufhängung,
- Fig. 2: die Vorrichtung gemäss Fig. 1 mit einem teleskopierbaren Halterungsarm,
- Fig. 3: die Vorrichtung mit einem Halterungsarm, welcher zwei beabstandete Gelenke aufweist,
- Fig. 4: eine Seitenansicht der Vorrichtung,
- Fig. 5: ein Teil-Ansicht der Vorrichtung in Richtung 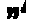 A" gemäss Fig. 4,
- Fig. 6: eine schematische Darstellung von einer möglichen Schwenkpositionen um die x-Achse,
- Fig. 7: eine schematische Darstellung von anderen möglichen Schwenkpositionen um die x-Achse,
- Fig. 8: Vorrichtung zum Drehen um die Schwenkachse 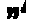 z".

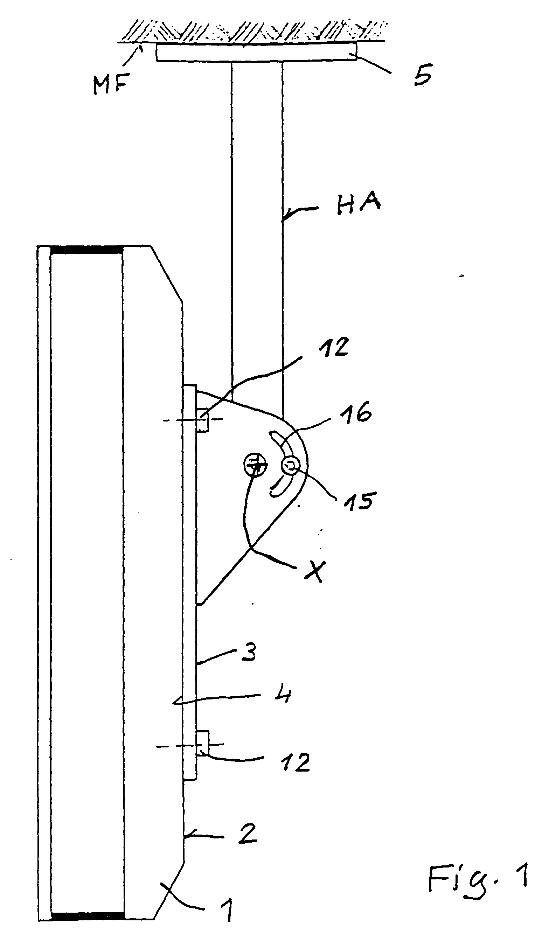

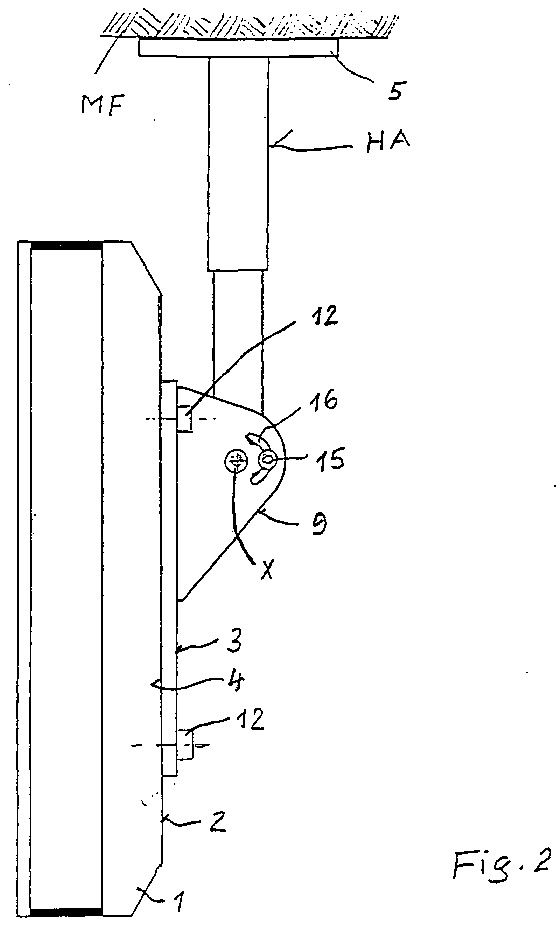

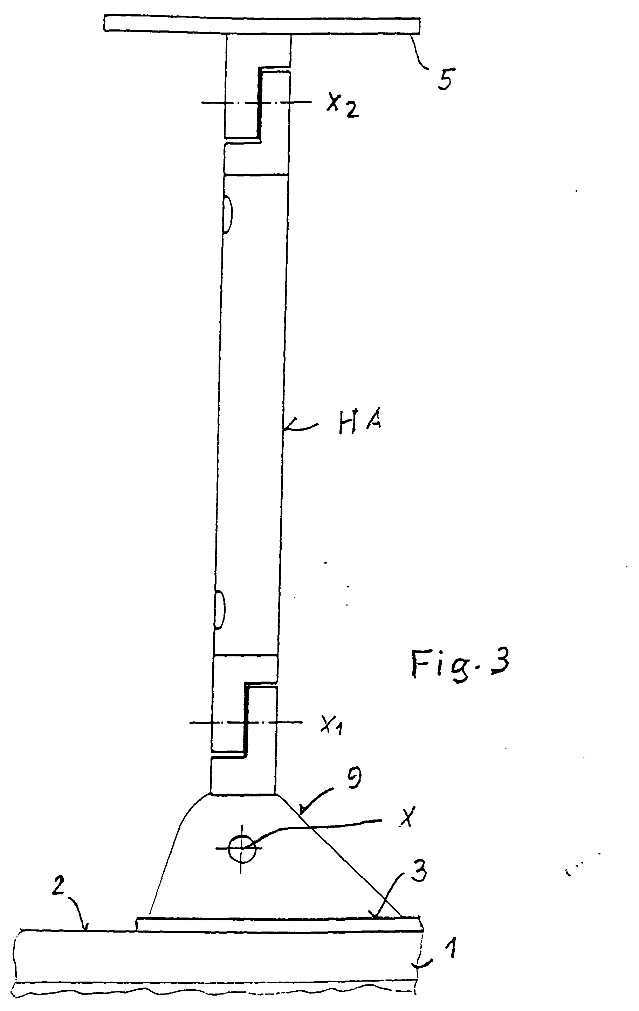

In den Fig. 1 bis 3 ist das zu befestigende Gerät mit 1 dessen Montagefläche mit 2 bezeichnet. Die Vorrichtung ist mit einer Grundplatte 3 versehen, welche eine Anschlussfläche 4 aufweist, die mit der Montagefläche 3 mittels der Verschraubungen 12 verbunden ist. Mit HA ist jeweils der Halterungsarm bezeichnet, welcher um die Achse (x) schwenkbar und in der jeweiligen Schwenklage fixierbar ist. In der in Fig. 3 dargestellten Position des Halterungsarms ist dieser mittels der Befestigungsschrauben 15 im sichelförmigen Schlitz 16 mit in seiner Schwenklage fixiert. Wie aus Fig. 2 zu entnehmen ist, besteht der Halterungsarm HA aus zwei gegeneinander teleskopierbaren Teilen, so dass der Abstand von der Fläche MF veränderlich ist.

Aus Fig. 3 ist ersichtlich, dass der Halterungsarm HA zwei Gelenke aufweisen kann, durch welche Schwenkungen um die Achsen x1 und x2 möglich sind.

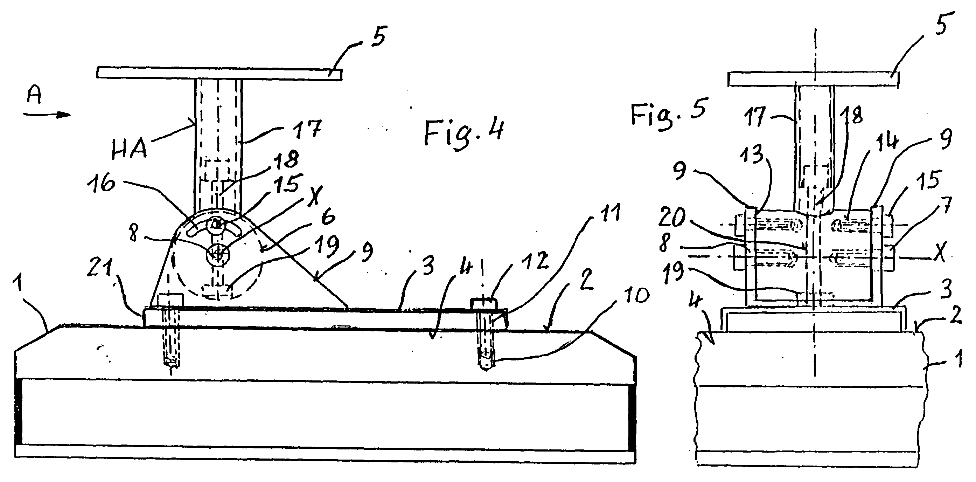

Die Fig. 4 und 5 zeigen den Aufbau der Schwenkvorrichtung, bestehend aus den beiden parallelen Seitenwandungen 9 mit den Lagerstellen I 8 entsprechend der x-Achse als Schwenkachse für den Halterungsarm HA, der in dem Schwenkkörper 6 befestigt ist. Der Halterungsarm HA ist ein Rohr 17, in dem im Inneren ein Ankerbolzen 18 sich an einem Bund abstützt, und der den Schwenkkörper 6 - Bohrung 20 gemäss Fig. 5- durchsetzt und mittels der Mutter 19 mit diesem verschraubt ist.

Die x-Achse wird im Ausführungsbeispiel von zwei die Lagerstellen I 8 bildenden Schwenkschrauben 7 gebildet. Die Befestigungsschrauben 15 durchsetzen die Seitenwandungen 9 und sind in die Gewindebohrungen 14 im Schwenkkörper 6 eingeschraubt. Die Grundplatte 3 kann als ebene Platte ausgebildet sein oder einen erhabenen Bordrand 21 aufweisen.

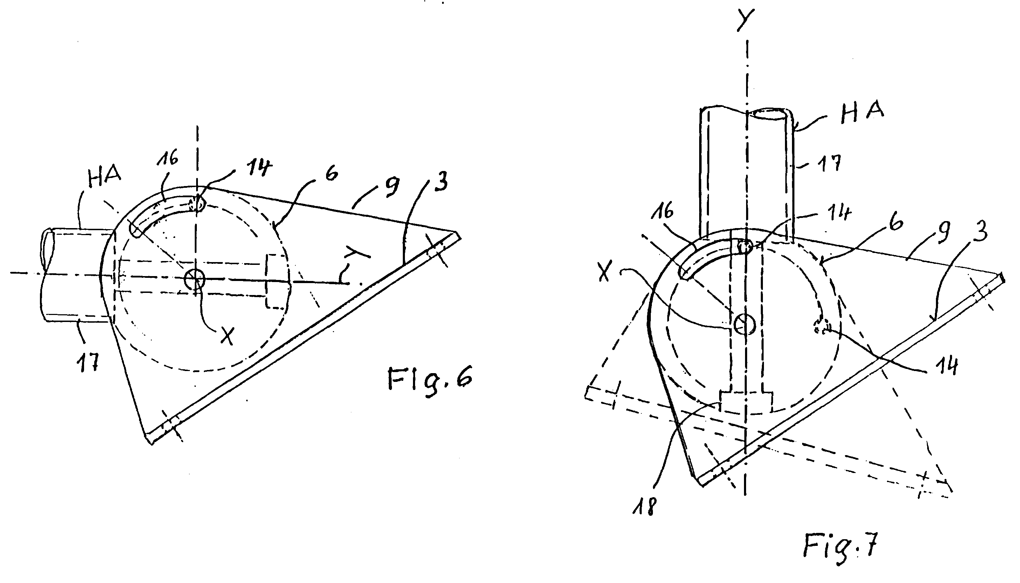

Die Figuren 6 und 7 zeigen zwei Dreh-Endpositionen der Vorrichtung um die x-Achse und die Lage der y-Achse, um die die im wesentlichen aus Seitenwandungen 9 und Schwenkkörper 6 bestehenden Vorrichtungsteile mittels Ankerbolzen 18 und dessen Mutter, im Halterungsarm HA dreh- und fixierbar gelagert sind. Die Drehung um die y-Achse ist unabängig davon einstellbar, welche der Bohrungen 14 durch die sichelförmigen Schlitze 16 zur Vorgabe des Schwenkbereichs genutzt wird.

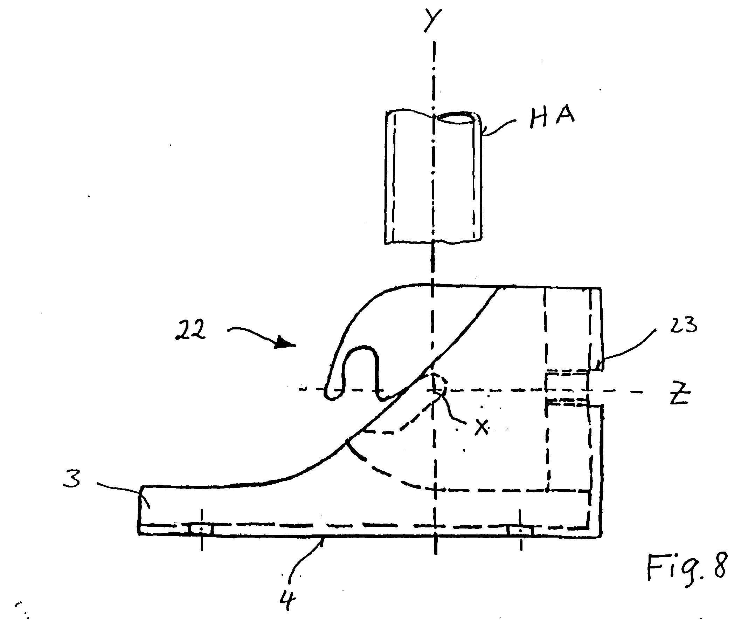

Die Fig. 8 zeigt eine Schwenkvorrichtung 22, die zur Aufnahme des Schwenkkörpers, der an dem abschnittsweise, geschnitten dargestellten Halterungsarm HA dreh- und fixierbar befestigt ist dient und die über eine Lagerung 23 innerhalb der Grundplatte 3 in der z-Achse um ca. ± 10° Grad gegenüber der Horizontalen schwenk und fixierbar ist. Die an der Anschlussfläche 4 befestigten Geräte wie z. B. Projektoren, sind somit in der horizontalen Ebene in den zwei zueinander senkrecht stehenden Achsen x und z ausrichtbar, unabhängig davon, welche Drehposition über die y-Achse eingestellt ist.

| POS. | BENENNUNG / DESIGNATION | | POS. | BENENNUNG / DESIGNATION |
|---|---|---|---|---|
| 1 | Gerät | | 55 | |
| 2 | Montagefläche | | 56 | |
| 3 | Grundplatte | | 57 | |
| 4 | Anschlussfläche | | 58 | |
| 5 | Wand-Anschlussplatte | | 59 | |
| 6 | Schwenkkörper | | 60 | |
| 7 | Schwenkschrauben | | 61 | |
| 8 | Lagerstelle I | | 62 | |
| 9 | Seitenwandung (parallel) | | 63 | |
| 10 | Verschraubung | | 64 | |
| 11 | Verschraubung | | 65 | |
| 12 | Verschraubung | | 66 | |
| 13 | Stirnfläche | | 67 | |
| 14 | Gewindebohrung | | 68 | |
| 15 | Befestigungsschraube | | 69 | |
| 16 | Sichelförmige Schlitze | | 70 | |
| 17 | Rohr | | 71 | |
| 18 | Ankerbolzen | | 72 | |
| 19 | Mutter | | 73 | |
| 20 | Bohrung | | 74 | |
| 21 | Bordrand | | 75 | |
| 22 | Schwenkvorrichtung | | 76 | |
| 23 | Lagerung | | 77 | |
| 24 | | | 78 | |
| 25 | | | 79 | |
| 26 | | | 80 | |
| 27 | | | 81 | |
| 28 | | | 82 | |
| 29 | | | 83 | |
| 30 | | | 84 | |
| 31 | | | 85 | |
| 32 | | | 86 | |
| 33 | | | 87 | |
| 34 | | | 88 | |
| 35 | | | 89 | |
| 36 | | | 90 | |
| 37 | | | 91 | |
| 38 | | | 92 | |
| 39 | | | 93 | |
| 40 | | | 94 | |
| 41 | | | 95 | |
| 42 | | | 96 | |
| 43 | | | 97 | |
| 44 | | | 98 | |
| 45 | | | HA | Halterungsarm |
| 46 | | | HV | Halterungsvorrichtung |
| 47 | | | MF | Massiv-Wandfläche |
| 48 | | | VM | Verbindungsmittel |
| 49 | | | x | Querlaufende Achse |
| 50 | | | x1 | Achse |
| 51 | | | x2 | Achse |
| 52 | | | y | Drehachse |
| 53 | | | z | Schwenkachse |
| 54 | | | | |

## Patentansprüche

1. Befestigungsvorrichtung zur ortsfesten Halterung von grossvolumigen, wenigstens eine ebene oder gekrümmte Montagefläche aufweisenden technischen Geraten, die beabstandet von vertikal oder horizontal sich erstreckenden, ebenen oder gekrümmten Massiv-Wandflächen angebracht sind, welche geschlossene Räume begrenzen, oder die im Freien aufgestellt sind,
gekennzeichnet durch
a) eine Grundplatte (3) mit einer ebenen oder gekrümmten Anschlussfläche (4) zum Verbinden mit der Montagefläche (2) des Gerätes (1),
b) lösbare, mechanisch formschlüssig wirkende Verbindungsmittel zwischen der Anschlussfläche (4) und der Montagefläche (2),
c) eine an die Grundplatte (3) starr angeschlossene Halterungsvorrichtung, an welcher wenigstens ein Halterungsarm (HA) um wenigstens eine Achse (x) schwenkbar und in jeder Schwenklage feststellbar angeordnet ist, und der
d) an einem Ende zum Befestigen an der Massiv-Wandfläche (MF) mit einer Wand-Anschlussplatte (5) versehen ist.

2. Befestigungsvorrichtung nach Anspruch 1, dadurch gekennzeichnet, dass das lösbare, mechanisch formschlüssige Verbindungsmittel eine Verschraubung (10, 11, 12) ist.

3. Befestigungsvorrichtung nach Anspruch 2, dadurch gekennzeichnet, dass die Verschraubung durch wenigstens zwei Sackloch-Gewindebohrungen (10) in der Montagefläche (2) des Gerätes (1), zwei mit diesen fluchtenden Bohrungen (11) in der Grundplatte (3) und wenigstens zwei Schrauben (12) gebildet ist.

4. Befestigungsvorrichtung nach Anspruch 1, dadurch gekennzeichnet, dass der Halterungsarm (HA) teleskopartig verlänger- und verkürzbar ist.

5. Befestigungsvorrichtung nach Anspruch 1, dadurch gekennzeichnet, dass die Halterungsvorrichtung (HV) wenigstens zwei beabstandete, parallele Seitenwandungen (9) aufweist, welche Lagerstellen I (8) für eine querverlaufende Achse (x) aufweisen, auf welcher ein zylindrischer Schwenkkörper (6) gelagert ist, an dem der Halterungsarm (HA) angebracht ist.

6. Befestigungsvorrichtung nach Anspruch 1, dadurch gekennzeichnet, dass der Halterungsarm (HA) um zwei Achsen voneinander beabstandete Achsen (X1) und (X2) schwenkbar ist, die in parallel zueinander verlaufenden oder sich kreuzenden Ebenen verlaufen.

7. Befestigungsvorrichtung nach Anspruch 5, dadurch gekennzeichnet, dass der zylindrische Schwenkkörper (6) an seinen den Seitenwandungen (9) zugewandten Stirnflächen (13) parallel zu seiner Achse (x) verlaufende Gewindebohrungen (14) aufweist, in welche Befestigungsschrauben (15) eingeschraubt sind, welche sichelförmige Schlitze (16) in den Seitenwandungen (9) durchsetzen und den Schwenkkörper (6) mit den Seitenwandungen (9) drehfest verbinden.

8. Befestigungsvorrichtung nach Anspruch 7, dadurch gekennzeichnet, dass an den Stirnflächen (13) des Schwenkkörpers (6) beidseitig wenigstens drei um ca. 90° versetzte Gewindebohrungen (14) angebracht sind.

9. Befestigungsvorrichtung nach Anspruch 1, dadurch gekennzeichnet, dass der Halterungsarm (HA) als Rohr (17) ausgebildet ist, welches mittels eines an einem im Inneren des Schwenkkörpers (6) vorhandenen Vorsprung abstützenden Ankerbolzens (18) in einer Bohrung (20) mittels einer Mutter (19) verschraubbar und der Schwenkkörper (6) um die im Ankerbolzen (18) verlaufende Drehachse (y) senkrecht zur Achse (x) dreh- und feststellbar ausgebildet ist.

10. Befestigungsvorrichtung nach Anspruch 1, dadurch gekennzeichnet, dass die Grundplatte (3) einen umlaufenden Bordrand (21) aufweist, mittels welchem sie sich auf der Montagefläche (2) des Gerätes (1) aufstützt.

11. Befestigungsvorrichtung nach Anspruch 1 und 9, dadurch gekennzeichnet, dass die Grundplatte (3) mittels einer, den am Halterungsarm (HA) drehbar befestigten Schwenkkörper (6) aufnehmenden Schwenkvorrichtung (22) um eine Schwenkachse (z) in einem Winkelbereich von -10° und +10° Grad zur Horizontalen schwenkbar ist, wobei die Achsen x, y und z senkrecht zueinander ausgerichtet sind.
